(19) Europäisches Patentamt
European Patent Office
Office européen des brevets

(11) **EP 4 672 644 A1**

(12) **EUROPEAN PATENT APPLICATION**

(43) Date of publication:
**31.12.2025 Bulletin 2026/01**

(21) Application number: **24382701.1**

(22) Date of filing: **28.06.2024**

(51) International Patent Classification (IPC):
*H04J 3/06* (2006.01)

(52) Cooperative Patent Classification (CPC):
**H04J 3/0641;** H04J 3/0667; H04J 3/14

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Safran Electronics & Defense Spain Sociedad Limitada**
**18014 Granada (ES)**

(72) Inventors:
• **DIAZ ALONSO, Javier**
**77550 MOISSY-CRAMAYEL (FR)**
• **ROS VIDAL, Eduardo**
**77550 MOISSY-CRAMAYEL (FR)**
• **LOPEZ JIMENEZ, José**
**77550 MOISSY-CRAMAYEL (FR)**
• **SOHN, David**
**77550 MOISSY-CRAMAYEL (FR)**

(74) Representative: **Isern Patentes y Marcas S.L.**
**Avda. Diagonal, 463 Bis, 2°**
**08036 Barcelona (ES)**

(54) **NETWORKED SYSTEM AND ASSOCIATED CALIBRATION PROCESS**

(57)     Networked system having at least a first device, a second device being connected to the first device, at least the second device comprises at least one holdover module (208) so that the second device could operate in a first mode wherein the second device is synchronized with the first device and a second mode wherein the synchronization between the first device and the second device is interrupted.

Associated calibration process.

Fig. 5a

EP 4 672 644 A1

**Description**

The present invention relates to a networked system.

The present invention also relates to a calibration process associated to this networked system.

BACKGROUND OF THE INVENTION

Time transfer technics between a transmitter and a receiver permit to synchronize said transmitter and said receiver. However, some time transfer technics assume the propagation delay from transmitter to receiver, and the reverse, are the same (symmetrical).

But more often these delays are different thus causing asymmetry and generating a phase offset during time transfer protocol.

It is then necessary to take into account that the propagation delays from transmitter to receiver, and the reverse, could not be necessary the same.

It is known from prior art the "White Rabbit project". This project was developed in order to create a "White Rabbit" network which could be used to provide better timing and synchronization. In particular the White Rabbit project takes into account the fact that a propagation delay from transmitter to receiver, and the reverse, are not necessarily the same.

A White Rabbit network uses a Precision Time Protocol to achieve sub-nanosecond accuracy. A two-way exchange of the Precision Time Protocol synchronization messages allows precise adjustment of clock phase and offset. The path delay between transmitter and receiver is known precisely via accurate hardware timestamps and the calculation of delay asymmetry.

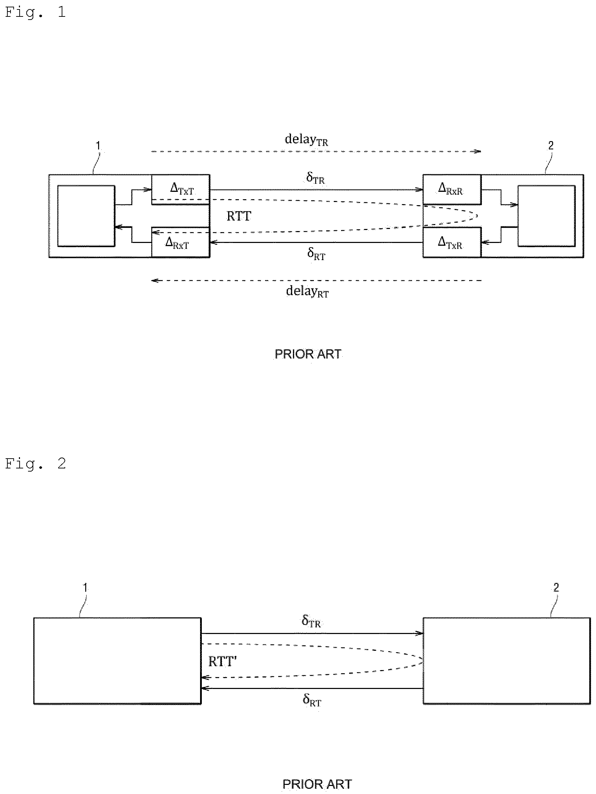

Figure 1 shows an example of a White Rabbit network when two devices are connected to each other, one of the devices being temporally a time transmitter 1 and the other of the device being temporally a time receiver 2.

With said White Rabbit model, round-trip time (RTT) between transmitter 1 and receiver 2 is defined by:

$$RTT = delay_{TR} + delay_{RT} \quad (1)$$

with

$delay_{TR}$ the forward path delay from the transmitter 1 to the receiver 2, and
$delay_{RT}$ the reverse path delay from the receiver 2 to the transmitter 1.

Each of the path delays in (1) is made up of:

- known components due to hardware of the transmitter 1 and receiver 2 (with the known transmission and reception delays of the transmitter 1 - $\Delta_{TxT}, \Delta_{RxT}$ - and the known transmission and reception delays of the receiver 2 - $\Delta_{RxR}, \Delta_{TxR}$), and
- unknown components due to the network's paths between the transmitter 1 and the receiver 2 i.e. network propagation delay from the transmitter to the receiver $\delta_{TR}$ and network propagation delay from the receiver to the transmitter $\delta_{RT}$.

This can be translated into the following equations (2) and (3):

$$delay_{TR} = \Delta_{TxT} + \delta_{TR} + \Delta_{RxR} \quad (2)$$

$$delay_{RT} = \Delta_{TxR} + \delta_{RT} + \Delta_{RxT} \quad (3)$$

The values for the known components ($\Delta_{TxT}$, $\Delta_{RxR}$, $\Delta_{TxR}$, $\Delta_{RxT}$) are determined using well-known techniques and/or are provided by the manufacturer of said elements.

Thus, the unknown components can be isolated to just show the "network paths" Round Trip Time (RTT') as in (4) and depicted in figure 2:

$$RTT' = \delta_{TR} + \delta_{RT} \quad (4)$$

Networked systems often include hops of network equipment of various types: transponders, muxponders, amplifiers like EDFA (Erbium Doped Fiber Amplifier), dispersion compensation modules (DCM), ....

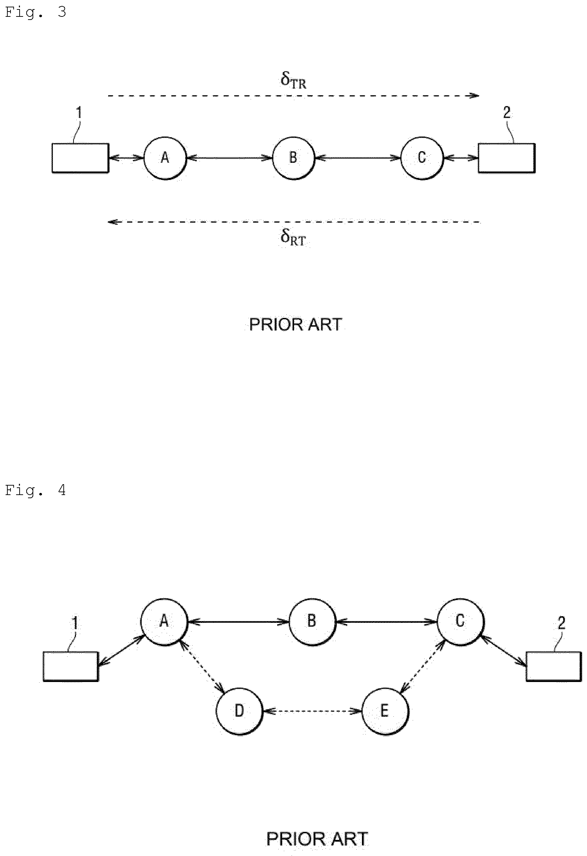

As illustrated figure 3, a typical setup between a transmitter 1 and a receiver 2 has multiple hops of network equipment. These hops are incorporated into the precited unknown elements.

A relative delay coefficient $\alpha$ incorporated the network paths delays ($\delta_{TR}$, $\delta_{RT}$) could be defined by:

$$\alpha = \frac{\delta_{TR}}{\delta_{RT}} - 1 \quad (5)$$

A calibration of the time transmitter 1 and/or the time receiver 2 could be implemented based on this relative delay coefficient in order to take into account a possibly asymmetry in the network.

However, during a time transfer protocol, there could be some routing changes in the routing path between the receiver and the transmitter. These routing changes affect the propagation delays and so can change the asymmetry in the networked system and introduce new phase offsets.

As visible figure 4, routing Path A shows a first routing path between a transmitter 1 and a receiver 2 of a network system through hops A, B, C of said network system. Routing Path B shows a (re-routed) second routing path between same time transmitter 1 and same time receiver 2 through hops A, D, E, C of said network system.

The unknown components calibrated with the relative delay coefficient ($\alpha$) between the network path delays ($\delta_{TR}$, $\delta_{RT}$) are different between Routing Path A and Routing Path B. Therefore, even if a calibration of the transmitter 1 and/or the receiver 2 was implemented based on the initial relative delay coefficient $\alpha_A$, this calibration is not adapted to the new routing paths. Thus, the synchronization between the transmitter 1 and the receiver 2 is not precise enough.

OBJECT OF THE INVENTION

An aim of the invention is to propose a solution that permits to improve the synchronization between two devices of a networked system.

SUMMARY OF THE INVENTION

In view of achieving at least partly this aim, it is proposed a networked system having at least a first device, a second device being connected to the first device. According to the invention at least the second device comprises at least one holdover module so that the second device could operate in a first mode wherein the second device is synchronized with the first device and a second mode wherein the synchronization between the first device and the second device is interrupted.

Therefore, if a routing path change between the first device and the second device is detected then the second device could jump into its holdover mode. Then, phase values from the new link setup could be compared to the holdover timing defined by the holdover module and a phase difference between them is measured. A new reference calibration value could then be defined as the original calibration value plus said phase difference. After that, the second device switches back to its steady mode and synchronization between first device and second device starts again taking account the new reference calibration value.

The synchronization between the two devices is then improved as it takes into account potential routing path change between said devices.

Optionally, the networked system respects IEEE 802.1Q and/or IEEE 802.3 and/or IEEE 1588-2008 standards. Optionally, the first device comprises at least a timing generator module, a comparison module and a timing reference module, wherein the first device is configured so that at least in the first mode of the second device, the timing generator module uses time comparison measurements, given from the comparison module, between timing reference given by the timing reference module and Tx timing given by the timing generator module to synchronize Tx timing.

Optionally, the second device comprises at least a timing generator module and a comparison module, wherein the second device is configured so that at least in the first mode of the second device, the timing generator module uses time comparison measurements, given from the comparison module, between a Tx timing given by the timing generator module and a recovered Rx timing coming from the exterior of the second device to synchronize Tx timing. Optionally, the second device is configured so that at least in the first mode of the second device, a holdover timing defined by the holdover module is synchronized with a recovered Rx timing coming from the exterior of the second device

The invention also relates to a calibration process of a system as precited, the calibration process comprising the following steps:

- if a routing path change is detected between the first device and the second device, move the first device into its second mode and stop any synchronization between the first device and the second device,
- measure at least a phase difference between at least a holdover timing defined by the holdover module and a timing received by the second device from the exterior of the second device and representative of the new routing path between the first device and the second device,

- deduce from this phase difference a new reference calibration value for at least one of the first or second devices,
- move the receiver in its first position and synchronize again the first device and the second device together taking account the new reference calibration value.

Optionally, timing received by the second device from the exterior of the second device is a timing send by the first device though the second routing path.

Optionally, the new reference calibration is added to an initial reference calibration representative of the first routing path between the first device and the second device.

Optionally, the second device calculates a change in a network delay from the first device to the second device due the routing path change, said change being calculated by time comparison measurements between a timing transmitted by the first device to the second device and a timing inside the first device.

Optionally, the first device calculates a change in a network delay from the second device to the first device due the routing path change, said change being calculated by time comparison measurements between a timing transmitted by the second device to the first device and a timing inside the second device.

Other features and advantages of the invention will emerge upon reading the following description of a particular, non-limiting embodiment of the invention.

BRIEF DESCRIPTION OF THE DRAWINGS

Figures 1 to 4 have already been introduced with reference to the description of the prior art.

[Fig. 1] Figure 1 is a schematic White Rabbit network showing a White Rabbit transmitter and a White Rabbit receiver;
[Fig. 2] Figure 2 is the schematic White Rabbit network of figure 1 in a simplified version showing just the routing path round-trip time,
[Fig. 3] Figure 3 is a more complex version of the White Rabbit network of figure 2,
[Fig. 4] Figure 4 is a more complex version of the White Rabbit network of figure 2, showing a first routing path and a second routing path.

Besides, the invention will be best understood in the light of the following description, in reference to the accompanying figures, among which:

[Fig. 5a] Figure 5a illustrates a first configuration of a White Rabbit networked system according to a particular embodiment of the invention;
[Fig. 5b] Figure 5b illustrates a second configuration of the networked system represented figure 5a;

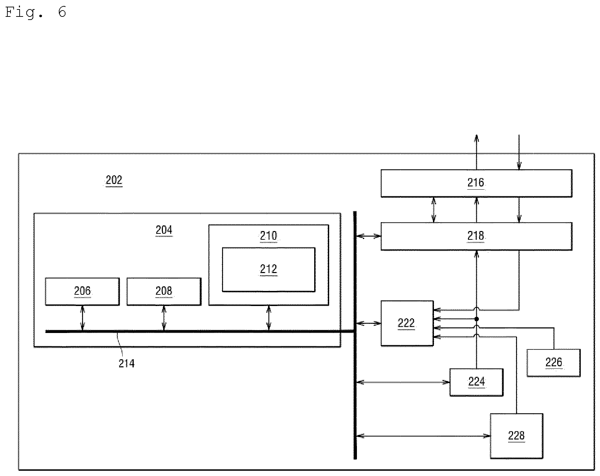

[Fig. 6] Figure 6 is a schematic view of one device of the networked system represented figure 5a;
[Fig. 7] Figure 7 is a process flow diagram implemented in the networked system represented figure 5a.

DETAILED DESCRIPTION OF THE INVENTION

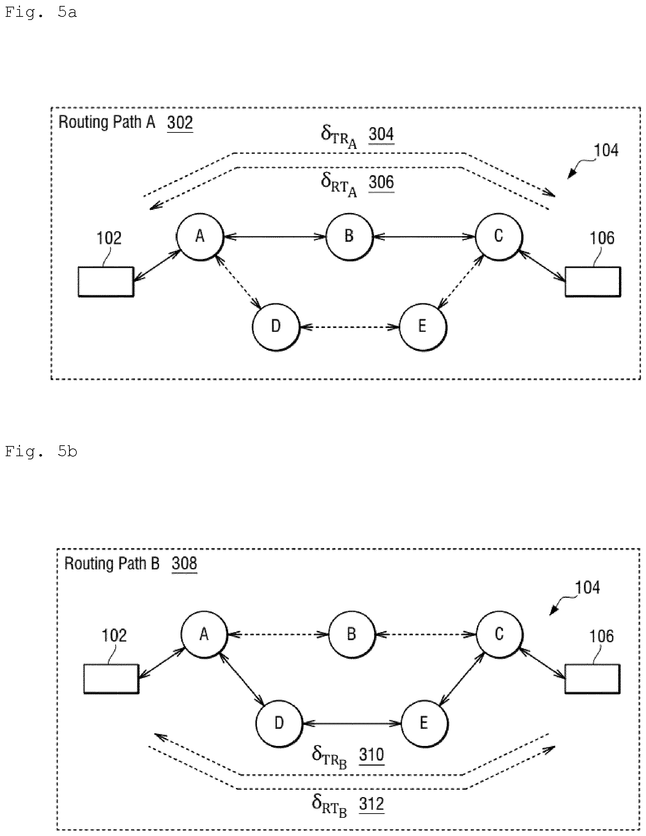

Referring to figures 5a et 5b, a networked system 104 according to a particular embodiment of the invention will now be described.

Said networked system 104 comprises a first device and a second device. Here the first device is only constituted of one element and the second device is only constituted of one element.

In a time transfer protocol, usually, a device is designated as a "time transmitter" and another as a "time receiver".

In the following, the first device will be the time transmitter (called transmitter 102 by the following) and the second device will be the time receiver (called receiver 106 by the following).

*We therefore use here a vocabulary specific to time transfer protocol but it is understood that the receiver 106 can also transmit data* to *the transmitter 102 and transmitter 102 can receive data from the receiver 106 and/or roles could be reversed.*

The transmitter 102 and/or receiver 106 are non-transitory computer readable medium.

The networked system 104 is conformed to be a White Rabbit networked system. Consequently, the receiver 106 and the transmitter 102 are respectively a White Rabbit receiver and a White Rabbit transmitter adapted for the invention (in particular they both comprise a holdover module that will be described below). Specifications for such a networked system (and in particular for such a transmitter and receiver) can be found, for example, here: https://white-rabbit.web. cern.ch/

Thus, the networked system 104 is a Bridged Local Area Network with VLANs (IEEE 802.1Q) that uses:

- Ethernet (IEEE 802.3) to interconnect switches and nodes of the networked system 104 (and so to interconnect the transmitter 102 and the receiver 106), and
- Precision Time Protocol (PTP, IEEE 1588-2008) to synchronize switches and nodes of the networked system 104 (and so to interconnect the transmitter 102 and the receiver 106).

Thus, the networked system 104 (and so the receiver 102 and the receptor 108) respect IEEE 802.1Q and/or IEEE 802.3 and/or IEEE 1588-2008 standards.

In an initial situation, the transmitter 102 and the receiver 106 are connected to each other via an initial routing path (called "Routing Path A") that comprises one or several links and one or several network hops of same or different types (transponders, muxponders, amplifiers like EDFA (Erbium Doped Fiber Amplifier), dispersion compensation modules (DCM), ...). For example, an initial routing path relies transmitter 102 to receiver 106 through hops A, B, C of the networked system 104.

However, as already stated, there could be routing changes during the networked system operations, so that the transmitter 102 and the receiver 106 could be connected to each other via another routing path. For example, another routing path could relies transmitter 102 to receiver 106 through hops A, D, E, C of said networked system 104.

The configuration of the transmitter 102 will be now described in view of figure 5. This description is fully transposable to the receiver 106 in the present case. Therefore, everything that will now be said about the transmitter 102 also applies to the receiver 106.

The transmitter 102 comprises a computing module 204. In the present case, the computing module 204 is a White Rabbit computing module.

The computing module 204 includes at least one processor 206.

The computing module 204 includes at least one memory 210. This memory 210 stores programmed instructions including at least a timing program incorporated in a timing core 212 of the memory 210. Said timing program is a White Rabbit timing program and/or said timing core 212 is a White Rabbit timing core.

The computing module 204 includes at least one communication interface 208.

Processor 206, memory 210 and communication interface 208 are coupled together and to the exterior of the computing module by a communication link 214 like for example a bus. The processor 206 is configured to execute programmed instructions stored in the memory 210 for the any number of functions or other operations illustrated and described. The transmitter 102 also comprises at least one timing generator module 224.

The transmitter 102 also comprises at least one timing reference module 226 that stores a time reference clock. The transmitter 102 also comprises at least one holdover module 228 that stores a holdover clock. The holdover clock is here a oscillator and preferably a precision oscillator. For example the holdover clock is an Oven Controlled X-tal(Crystal) Oscillator (OCXO) or a Rubidium oscillator. The transmitter 120 also comprises at least one timing comparison module 222.

The transmitter 102 also comprises at least one network interface 216.

The time generator 224, the holdover module 228, the timing reference module 226, the timing comparison module 222 and the network interface 216 are coupled together and to the computing module 204 by a communication link 214 like for example a bus.

The network interface 216 is the interface between the transmitter 102 and the remains of the networked system 104. Thus, all signals exchanged between the transmitter 102 and the remain of the networked system passes through this network interface 216.

In service, the timing comparison module 222 of the transmitter 102 measures the time differences between at least two of the following components: a Tx timing 218 coming from the timing generator module 224, a timing reference coming from a timing reference module 226, a holdover timing coming from the holdover module 228, a recovered Rx timing 220 coming from the network interface 216 (and sending by another device of the networked system 104), etc.

Thus, the timing generator module 224 generates the Tx timing 218 in the transmitter 102 from time comparison measurements coming from timing comparison module 222.

In service, in a steady mode of the transmitter 102, the timing generator module 224 of the transmitter 102 uses time comparison measurements, from the timing comparison module 222, between timing reference given by timing reference module 226 and Tx timing 218 to synchronize Tx timing 218 with said timing reference.

In service, in a steady mode, in the receiver 106, the timing generator 224 of the receiver 106 uses time comparison measurements, from the timing comparison module 222, between a recovered Rx timing 220 and Tx timing 218 to synchronize Tx timing 218 with said recovered Rx timing 220.

In service, in a steady mode, in the receiver 106, the computing device 204 uses time comparison measurements, from the timing compare module 222, between recovered Rx timing 220 and the holdover timing given by the holdover module 228 to synchronize the holdover timing with said Rx timing 220.

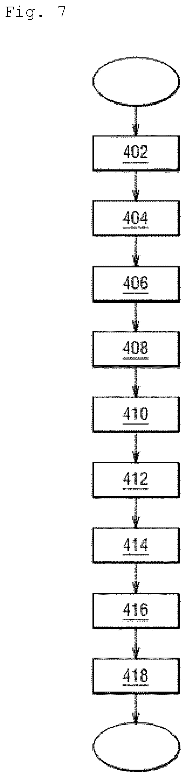

A calibration process will now be described in view of figure 7.

In a first step 402, the transmitter 102 and receiver 106 operate in the initial state thus using Routing Path A 302 for exchanging data. The receiver 106 is into its steady mode i.e. the holdover clock is synchronized with recovered Rx timing 220.

Thus, the following equations could be defined as in prior art:

$$RTT'_A = \delta_{TR_A} + \delta_{RT_A} \qquad (6)$$

$$\alpha_A = \frac{\delta_{TR_A}}{\delta_{RT_A}} - 1 \qquad (7)$$

with $\delta_{TR_A}$ network propagation delay from the transmitter 102 to the receiver 106 and $\delta_{RT_A}$ network propagation delay from the receiver 106 to the transmitter 102.

The initial relative delay coefficient $\alpha_A$ is already known (by well-known prior art methods) and configured in the timing cores 212 of the transmitter 102 and receiver 106. The network round trip time for representative Routing Path A 302 $RTT'_A$ is then calculated on the basis on this initial relative delay coefficient $\alpha_A$. $RTT'_A$ is for example calculated through a time transfer protocol, like PTP, running between the time transmitter 102 and receiver 106. Said network round trip time $RTT'_A$ is recorded by computing device 204 of the receiver 106. Said network round trip time $RTT'_A$ could optionally also be recorded by computing device 204 of the transmitter 120.

In second step 404, if an event occurs on the networked system 104 (during the network timing protocol running between the time transmitter 102 and receiver 106) there could be a network routing path change between the transmitter 102 and receiver 106. For example, the transmitter 102 and receiver 106 uses Routing Path B 308 for exchanging data.

The variable delay elements ($\delta_{TR_A}$ 304, $\delta_{RT_A}$ 306) calibrated with the relative delay coefficient ($\alpha_A$) for representative Routing Path A 302 during first step 402 are then no longer valid.

Applying (5) for representative Routing Path B 308 to represent the new relative delay coefficient ($\alpha_B$) with the variable delay elements ($\delta_{TR_B}$ 310, $\delta_{RT_B}$ 312) leads to:

$$\alpha_B = \frac{\delta_{TR_B}}{\delta_{RT_B}} - 1 \qquad (8)$$

with $\delta_{TR_B}$ network propagation delay from the transmitter 102 to the receiver 106 and $\delta_{RT_B}$ network propagation delay from the receiver 106 to the transmitter 102.

In third step 406, the receiver 106 detects the network routing path change from Routing Path A 302 to Routing Path B 308. Such detection could be implemented by notifications from elements within the networked system 104 and/or could be implemented by notifications from elements monitoring the networked system 104 and/or could be implemented by statistical or other detection techniques within the running time transfer protocol between the time transmitter 102 and receiver 106.

Then, in a fourth step 408, since the receiver 106 has detected the network routing change from representative Routing Path A 302 to Routing Path B 308, the receiver 106 moves to its holdover mode. In its holdover mode, computing module 204 of receiver 106 stops synchronizing holdover timing from the holdover module 228 with the Recovered Rx Timing. Therefore, holdover timing from the holdover module 228 could free-run based on the previous synchronization periods of first step 402.

Time generator module 224 of receiver 106 uses time comparison measurements from the timing comparison module 222 - between the free-running holdover module 228 from the holdover module 228 and Tx timing 218 - to synchronize Tx timing 218 with the free-running holdover module 228. Therefore, the Tx timing 218 of receiver 106 is representative of the phase(s) and frequency(ies) of the previous synchronization periods under representative Routing Path A 302.

Therefore, in this fourth step 408, synchronization of the receiver 106 with the transmitter 102 (though known time transfer protocol) are temporally suspended. This includes also the synchronization of any oscillator that could be included in the receiver 106 and/or transmitter 102.

In fifth step 410, the receiver 106 calculates the change in the network delay ($\Delta\delta_{TR_{AB}}$) from the transmitter 102 to the receiver 106 - $\Delta\delta_{TR_{AB}}$ appears because of the network routing change from representative Routing Path A 302 to Routing Path B 308. The change in the network delay ($\Delta\delta_{TR_{AB}}$) could be represented in (9) by the difference in the network delays ($\delta_{TR_A}$ 304, $\delta_{TR_B}$ 310) from the transmitter 102 to receiver 106.

$$\Delta\delta_{TR_{AB}} = \delta_{TR_A} - \delta_{TR_B} \qquad (9)$$

Said change $\Delta\delta_{TRAB}$ is for example calculated by time comparison measurements from the timing comparison module 222 of the receiver 106 between recovered Rx timing module 220 received by the receiver 106 and Tx timing 218 of the receiver 106.

Said change $\Delta\delta_{TRAB}$ is recorded by computing device 204 of receiver 106.

In sixth step 412, as the receiver 106 has already detected the network routing change from representative Routing Path A 302 to Routing Path B 308, the transmitter 102 automatically calculates the change in the network delay $\Delta\delta_{RTAB}$ from the receiver 106 to the transmitter 102 - $\Delta\delta_{RTAB}$ appears because of the network routing change from representative Routing Path A 302 to Routing Path B 308.

The change in the network delay $\Delta\delta_{RTAB}$ could be represented in (10) by the difference in the network delays ($\delta_{RTA}$ 306, $\delta_{RTB}$ 312) from the time receiver 106 to time transmitter 102 :

$$\Delta\delta_{RT_{AB}} = \delta_{RT_A} - \delta_{RT_B} \qquad (10)$$

Said change $\Delta\delta_{RTAB}$ is for example calculated by time comparison measurements from the timing comparison module 222 of the transmitter 102 between recovered Rx timing 220 received by the transmitter 102 and timing reference coming from the timing reference module 226 of transmitter 102.

Said change $\Delta\delta_{RTAB}$ is recorded by computing device 204 of transmitter 102.

In seventh step 414 the new relative delay coefficient $\alpha_B$ for representative Routing Path B 308 is calculated using the recorded round trip time $RTT'_A$ of first step 402, the relative delay coefficient $\alpha_A$ of first step 402, and changes in the network delays $\Delta\delta_{TRAB}$ and $\Delta\delta_{RTAB}$ recorded in respectively fifth step 410 and sixth step 412.

To this end, using (7) for isolating $\delta_{TRA}$ 304 generates (11); and incorporating (11) into (6) generates (12).

$$\delta_{TR_A} = \delta_{RT_A}(\alpha_A + 1) \qquad (11)$$

$$RTT'_A = \delta_{RT_A}(\alpha_A + 1) + \delta_{RT_A} \qquad (12)$$

Reducing (12) generates (13); and using (13) for isolating for $\delta_{RTA}$ 306 generates (14) .

$$RTT'_A = \delta_{RT_A}(\alpha_A + 2) \qquad (13)$$

$$\delta_{RT_A} = \frac{RTT'_A}{\alpha_A + 2} \qquad (14)$$

Incorporating (14) into (11) generates (15).

$$\delta_{TR_A} = RTT'_A \left(\frac{\alpha_A + 1}{\alpha_A + 2}\right) \qquad (15)$$

Incorporating (15) into (9) generates (16); and using (16) for isolating $\delta_{TRB}$ 310 generates (17).

$$\Delta\delta_{TR_{AB}} = RTT'_A \left(\frac{\alpha_A + 1}{\alpha_A + 2}\right) - \delta_{TR_B} \qquad (16)$$

$$\delta_{TR_B} = RTT'_A \left(\frac{\alpha_A + 1}{\alpha_A + 2}\right) - \Delta\delta_{TR_{AB}} \qquad (17)$$

Incorporating (14) into (10) generates (18); and using (18) for isolating $\delta_{RTB}$ 312 generates (19).

$$\Delta\delta_{RT_{AB}} = \frac{RTT'_A}{\alpha_A + 2} - \delta_{RT_B} \qquad (18)$$

$$\delta_{RT_B} = \frac{RTT'_A}{\alpha_A + 2} - \Delta\delta_{RT_{AB}} \qquad (19)$$

Using (17) and (19) and values $RTT'_A$, $\alpha_A$, $\Delta\delta_{TRAB}$ and $\Delta\delta_{RTAB}$ being known, $\delta_{TRB}$ 310 and $\delta_{RTB}$ 312 can be calculated.

Using (8) and the calculated values, the new relative delay coefficient $\alpha_B$ for representative Routing Path B 308 is then calculated.

In eight step 416, the new relative delay coefficient $\alpha_B$ for representative Routing Path B 308 is configured in the timing cores 212 of the transmitter 102 and receiver 106. This permits to calibrate the networked system and in particular its transmitter 102 and receiver 106. Therefore, over a short period of time, the new offset created by the re-routing change is measured and then a corresponding new calibration value is added to the previous calibration value.

In nineth step 418, the receiver 106 moves from its holdover mode into its steady mode.

Then, the timing generator 224 of the receiver 106 uses timing comparison measurements from the timing comparison module 222 of the receiver 106 between a recovered Rx timing 220 received by the receiver 106 and Tx timing 218 of the receiver 106 to synchronize Tx timing 218 of the receiver 106 with recovered Rx timing 220.

Moreover, the computing module 204 of the receiver 106 uses timing comparison measurements from the timing comparison modules 222 of the receiver 106 between recovered Rx timing 220 received by the receiver 106 and the holdover timing given by the holdover timing module 228 of the receiver 106 to synchronize the holdover timing of the receiver 106 with recovered Rx timing 220.

Thus, synchronization of the receiver 106 with the transmitter 102 (though known time transfer protocol) resumes taking into account the new calibration value.

Therefore, with this calibration process, if a routing path change is detected then the receiver 106 jumps into its holdover mode. Then, phase values from the new link setup are compared to the holdover timing and a phase difference between them is measured. A new reference calibration value is then defined as the original calibration value plus said phase difference. After that, the receiver 106 switches back to its steady mode and synchronization between the transmitter and the receiver starts again with taking account the new reference calibration value.

Besides, this calibration process permits to detect any re-routing operations.

Moreover, asymmetry of the networked system could be automatically estimated.

Besides, new roundtrip time changes calculated in the calibration process can be used as footprint to detect return to previous routing paths or additional routing changes.

Moreover, the new reference calibration value includes the phase offset so there is no phase jump in the networked system.

The invention is not limited to the disclosed embodiments, which have just been described, but on the contrary, includes any variant having, with equivalent means, the main features stated above.

In particular, the time transfer protocol used in the present calibration process could be different than a White Rabbit one. Other traditional time protocols than the one defined in the White Rabbit project and/or the precision time protocol could be used in particular for performing the traditional time protocol like for example a Time Transfer protocol over Dynamic Synchronous Transfer Mode (DTM).

**Claims**

1. Networked system having at least a first device, a second device being connected to the first device, the system being **characterized in that** at least the second device comprises at least one holdover module (228) so that the second device could operate in a first mode wherein the second device is synchronized with the first device and a second mode wherein the synchronization between the first device and the second device is interrupted.

2. Networked system according to claim 1, wherein the networked system respects IEEE 802.1Q and/or IEEE 802.3 and/or IEEE 1588-2008 standards.

3. Networked system according to claim 1 or claim 2, wherein the first device comprises at least a timing generator module (224), a comparison module (222) and a timing reference module (226), wherein the first device is configured so that at least in the first mode of the second device, the timing generator module uses time comparison measurements, given from the comparison module, between timing reference given by the timing reference module and Tx timing given by the timing generator module to synchronize Tx timing.

4. Networked system according to any of claim 1 to claim 3, wherein the second device comprises at least a timing generator module (224) and a comparison module (222), wherein the second device is configured so that at least in the first mode of the second device, the timing generator module uses time comparison measurements, given from the comparison module, between a Tx timing given by the timing generator module and a recovered Rx timing coming from the exterior of the second device to synchronize Tx timing.

5. Networked system according to any of claim 1 to claim 4, wherein the second device is configured so that at least in the first mode of the second device, a holdover timing defined by the holdover module is synchronized with a recovered Rx timing coming from the exterior of the second device

6. Calibration process of a system according to any of previous claims, wherein the calibration process comprising the following steps:

- if a routing path change is detected between the first device and the second device from a first path change to a second path change, move the second device into its second mode and stop any synchronization between the first device and the second device,
- measure at least a phase difference between at least a holdover timing defined by the holdover module (228) and a timing received by the second device from the exterior of the second device and representative of the second routing path between the first device and the second device,
- deduce from this phase difference a new reference calibration value for at least one of the first or second devices,
- move the receiver in its first position and synchronize again the first device and the second device together taking account the new reference calibration value.

7. Calibration process according to claim 6, wherein timing received by the second device from the exterior of the second device is a timing send by the first device though the second routing path.

8. Calibration process according to claim 6 or 7, wherein the new reference calibration is added to an initial reference calibration representative of the first routing path between the first device and the second device.

9. Calibration process according to any of claims 6 to 8, wherein the second device calculates a change in a network delay ($\Delta\delta_{TRAB}$) from the first device to the second device due the routing path change, said change being calculated by time comparison measurements between a timing transmitted by the first device to the second device 106 and a timing inside the first device.

10. Calibration process according to any of claims 6 to 9, wherein the first device calculates a change in a network delay ($\Delta\delta_{RTAB}$) from the second device to the first device due the routing path change, said change being calculated by time comparison measurements between a timing transmitted by the second device to the first device and a timing inside the second device.

Fig. 1

PRIOR ART

Fig. 2

PRIOR ART

Fig. 3

PRIOR ART

Fig. 4

PRIOR ART

Fig. 5a

Routing Path A  302

$\delta_{TR_A}$  304

$\delta_{RT_A}$  306

104

102

A   B   C

106

D   E

Fig. 5b

Routing Path B  308

104

102

A   B   C

106

D   E

$\delta_{TR_B}$  310

$\delta_{RT_B}$  312

Fig. 6

Fig. 7

```
        ╭─────────╮
        │         │
        ╰────┬────╯
             │
             ▼
        ┌─────────┐
        │   402   │
        └────┬────┘
             │
             ▼
        ┌─────────┐
        │   404   │
        └────┬────┘
             │
             ▼
        ┌─────────┐
        │   406   │
        └────┬────┘
             │
             ▼
        ┌─────────┐
        │   408   │
        └────┬────┘
             │
             ▼
        ┌─────────┐
        │   410   │
        └────┬────┘
             │
             ▼
        ┌─────────┐
        │   412   │
        └────┬────┘
             │
             ▼
        ┌─────────┐
        │   414   │
        └────┬────┘
             │
             ▼
        ┌─────────┐
        │   416   │
        └────┬────┘
             │
             ▼
        ┌─────────┐
        │   418   │
        └────┬────┘
             │
             ▼
        ╭─────────╮
        │         │
        ╰─────────╯
```

| | Europäisches Patentamt European Patent Office Office européen des brevets | **EUROPEAN SEARCH REPORT** | **Application Number** EP 24 38 2701 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2024/072921 A1 (PENG YAO [CN] ET AL) 29 February 2024 (2024-02-29) * paragraph [0001] * * paragraph [0006] - paragraph [0007] * * paragraph [0011] - paragraph [0028] * * paragraph [0030] - paragraph [0033] * * paragraph [0070] - paragraph [0078] * * paragraph [0088] - paragraph [0107] * * paragraph [0152] - paragraph [0161] * * figures 1A, 1B, 1C, 1D, 2,3,4,9 * ----- | 1-10 | INV. H04J3/06 |
| X | "Architecture and requirements for packet-based time and phase distribution - Amendment 1; G.8275/Y.1369 (2020) Amendment 1 (05/21)", ITU-T STANDARD G.8275, INTERNATIONAL TELECOMMUNICATION UNION, GENEVA ; CH , no. G.8275/Y.1369 (2020) Amendment 1 (05/21) 29 May 2021 (2021-05-29), pages 1-55, XP044311617, Retrieved from the Internet: URL:http://mirror2.itu.int/dms/pay/itu-t/r ec/g/T-REC-G.8275-202105-P!Amd1!PDF-E.pdf [retrieved on 2021-06-22] * sections 7 to 7.3; Annex VIII * ----- -/-- | 1-10 | |
| | | | TECHNICAL FIELDS SEARCHED (IPC) H04J |

The present search report has been drawn up for all claims

| Place of search | Date of completion of the search | Examiner |
|---|---|---|
| The Hague | 25 November 2024 | Roldán Andrade, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
............................................................................
& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 24 38 2701

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JEFFREY A SHERMAN ET AL: "A Resilient Architecture for the Realization and Distribution of Coordinated Universal Time to Critical Infrastructure Systems in the United States: Methodologies and Recommendations from the National Institute of Standards and Technology (NIST) NIST TN 2187", NIST, NATIONAL INSTITUTE OF STANDARDS AND TECHNOLOGY (NIST) , 3 November 2021 (2021-11-03), pages 1-189, XP061069679, DOI: 10.6028/NIST.TN.2187 Retrieved from the Internet: URL:https://nvlpubs.nist.gov/nistpubs/TechnicalNotes/NIST.TN.2187.pdf [retrieved on 2021-11-03] * Sections III.B to III.B.2 * ----- | 1-10 | |
| X | EP 2 675 102 A1 (MITSUBISHI ELECTRIC CORP [JP]) 18 December 2013 (2013-12-18) * paragraph [0001] - paragraph [0003] * * paragraph [0007] - paragraph [0008] * * paragraph [0017] - paragraph [0018] * * paragraph [0022] - paragraph [0032] * * paragraph [0034] - paragraph [0046] * * paragraph [0088] - paragraph [0100] * * paragraph [0126] - paragraph [0134] * * paragraph [0139] - paragraph [0141] * * figures 1-3, 8-11 * ----- -/-- | 1-10 | TECHNICAL FIELDS SEARCHED (IPC) |

The present search report has been drawn up for all claims

| Place of search | Date of completion of the search | Examiner |
|---|---|---|
| The Hague | 25 November 2024 | Roldán Andrade, J |

EPO FORM 1503 03.82 (P04C01)

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | MACIEJ LIPINSKI ET AL: "White rabbit: a PTP application for robust sub-nanosecond synchronization", PRECISION CLOCK SYNCHRONIZATION FOR MEASUREMENT CONTROL AND COMMUNICATION (ISPCS), 2011 INTERNATIONAL IEEE SYMPOSIUM ON, IEEE, 12 September 2011 (2011-09-12), pages 25-30, XP031974499, DOI: 10.1109/ISPCS.2011.6070148 ISBN: 978-1-61284-893-8 * the whole document * ----- | 1-10 | |
| | | | **TECHNICAL FIELDS SEARCHED (IPC)** |

The present search report has been drawn up for all claims

| Place of search | Date of completion of the search | Examiner |
|---|---|---|
| The Hague | 25 November 2024 | Roldán Andrade, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................................................

& : member of the same patent family, corresponding document

EPO FORM 1503 03.82 (P04C01)

page 3 of 3

## ANNEX TO THE EUROPEAN SEARCH REPORT
## ON EUROPEAN PATENT APPLICATION NO.

EP 24 38 2701

This annex lists the patent family members relating to the patent documents cited in the above-mentioned European search report.
The members are as contained in the European Patent Office EDP file on
The European Patent Office is in no way liable for these particulars which are merely given for the purpose of information.

25-11-2024

| Patent document cited in search report | Publication date | Patent family member(s) | Publication date |
|---|---|---|---|
| US 2024072921 A1 | 29-02-2024 | EP 4289100 A1 | 13-12-2023 |
| | | US 2024072921 A1 | 29-02-2024 |
| | | WO 2022166473 A1 | 11-08-2022 |
| EP 2675102 A1 | 18-12-2013 | CN 103329475 A | 25-09-2013 |
| | | EP 2675102 A1 | 18-12-2013 |
| | | JP 5595529 B2 | 24-09-2014 |
| | | JP WO2012108387 A1 | 03-07-2014 |
| | | TW 201301803 A | 01-01-2013 |
| | | US 2013266306 A1 | 10-10-2013 |
| | | WO 2012108387 A1 | 16-08-2012 |

EPO FORM P0459

For more details about this annex : see Official Journal of the European Patent Office, No. 12/82